(19) **Europäisches Patentamt**

**European Patent Office**

**Office européen des brevets**

(11) **EP 0 758 153 B1**

(12) **EUROPÄISCHE PATENTSCHRIFT**

(45) Veröffentlichungstag und Bekanntmachung des Hinweises auf die Patenterteilung:
**17.07.2002  Patentblatt 2002/29**

(51) Int Cl.7: **H02J 9/00**

(21) Anmeldenummer: **96112343.7**

(22) Anmeldetag: **31.07.1996**

(54) **Schalteinrichtung zur Stromlosschaltung eines Transformators**

Circuit device for disconnecting a transformer not under load

Circuit pour déconnecter un transformateur hors charge

(84) Benannte Vertragsstaaten:
**AT BE CH DE DK ES FR GB GR IT LI NL SE**

(30) Priorität: **07.08.1995  CH 227195**
**10.11.1995  CH 318395**

(43) Veröffentlichungstag der Anmeldung:
**12.02.1997  Patentblatt 1997/07**

(73) Patentinhaber: **ASPRO TECHNOLOGY AG**
**5103 Wildegg (CH)**

(72) Erfinder: **Kälin, Ruedi**
**5703 Seon (CH)**

(74) Vertreter: **Bosshard, Ernst**
**Luchs & Partner**
**Patentanwälte**
**Schulhausstrasse 12**
**8002 Zürich (CH)**

(56) Entgegenhaltungen:
**EP-A- 0 622 883       WO-A-95/10875**

**Beschreibung**

Die Erfindung bezieht sich auf eine Schalteinrichtung nach dem Oberbegriff des Patentanspruchs 1.

Es sind zahllose Kleintransformatoren in Betrieb, welche in Europa üblicherweise etwa 230 V betragende Netzspannung auf 1 bis 50 Volt vorzugsweise etwa 2 bis 12 Volt heruntertransformieren, für den Anschluss von Schwachstromgeräten, beispielsweise Telekommunikationsgeräten oder Halogenlampen. Ein derartiger Kleintransformator ist beispielsweise aus EP 0 485 341 bekannt. Nachteilig ist, dass solche Transformatoren vielfach entweder über viele Stunden, ja sogar das ganze Jahr am Versorgungsnetz angeschlossen bleiben, obschon vom Verbraucher nur während kurzer Zeit, beispielsweise einigen Minuten pro Tag, Strom benötigt wird. Solche Transformatoren verbrauchen auch im Leerlaufbetrieb Strom. Bei einem durchschnittlichen Kleintransformator sind dies etwa 30 mA. Bei ständiger Einschaltdauer ergibt dies einen nutzlosen Verbrauch von etwa 55kWh pro Jahr.

Aus EPA 0 622 883 ist eine Stromversorgung für eine Telekommunikationseinrichtung bekannt, bei welcher ein Transformator eine Zusatzwicklung mit einem zugehörigen Ueberwachungsteil aufweist. Mit dieser Einrichtung soll im Bedarfsfall bei Ausfall der Hauptstromversorgung auf eine Batterie umgestellt werden.

Ferner ist aus WO95 10875A ein Konzept zur Bereitschaftsschaltung einer Stromversorgung bekannt, das zur Einsparung von Energie im System geeignet ist.

Mit der Erfindung soll die Aufgabe gelöst werden, eine Vorrichtung und ein Verfahren zu schaffen, welche den Betrieb der Transformatorstromversorgungseinrichtung an den Betriebszustand des Verbrauchers anpasst indem mit einfachen Mitteln ein Abtrennen der Primärseite eines Transformators vom Versorgungsnetz bewirkt wird. Dies geschieht, solange verbrauchseitig kein Strom benötigt wird und eine automatische Einschaltung erfolgt, wenn von einem Verbraucher Strom, beispielsweise Batterieladestrom, benötigt wird.

Diese Aufgabe wird durch die im Kennzeichen des Anspruches 1 und 7 genannten Merkmale gelöst.

Die Feststellung, ob von einem Verbraucher Strom benötigt wird oder nicht, beruht auf der Auswertung der Aenderung der magnetischen Sättigung des Eisenkernes des Transformators. Gegenüber handelsüblichen Transformatoren wird eine Zusatzwicklung benötigt, in welcher ein Steuersignal induziert wird, das zur Beeinflussung eines Transistors ausgewertet wird.

In der Zeichnung sind Ausführungsbeispiele des Erfindungsgegenstandes dargestellt. Es zeigen:

Fig.1 einen Schaltplan eines Schwachstromverbrauchers

Fig.2 eine Hystereseschleife mit eingezeichneten Arbeitspunkten

Fig.3 einen Teil-Schaltplan für ein Batterie-Ladegerät.

Die Netzanschlussleitungen 1,2 führen die übliche Speisespannung von beispielsweise 230 Volt. Die eine Leitung 1 ist mit einem einen Transistor 10 enthaltenden Wechselstrom-Schalter 3 verbunden, von dem eine Leitung 4 zur Primärwicklung 6 eines Transformators 7 führt. Die Primärwicklung 5 ist mit einer Zusatzwicklung 6 versehen, wobei die Wicklungszahl der Primärwicklung 5 mindestens das 5-fache - vorzugweise etwa das 20-fache - der Zusatzwicklung 6 betragen soll. Die Zusatzwicklung 6 ist koaxial aussen oder innen um die Primärwicklung angeordnet. Von der Sekundärwicklung 8 führen Leitungen 10, 12 zu einem Schwachstromverbraucher 11 oder einen Gleichrichter 14. Zwischen der Primär- und Sekundä rwicklung 5,8 befindet sich in üblicher Weise ein Eisenkern 9.

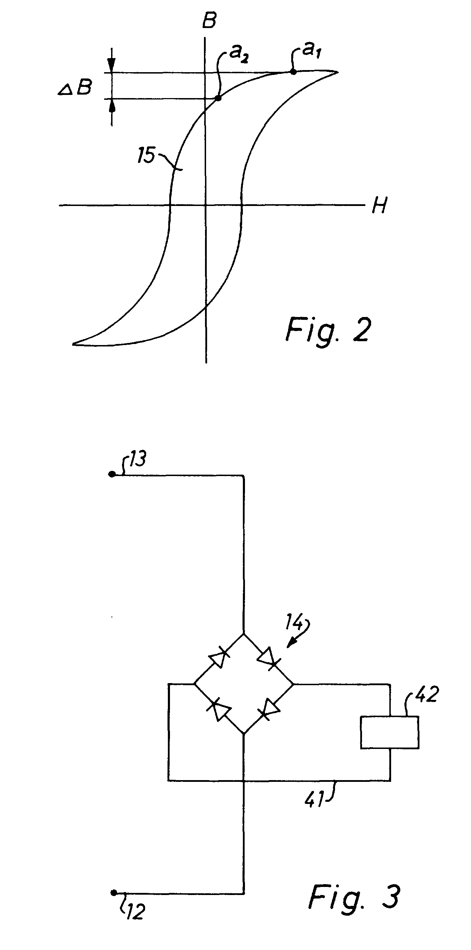

Ausgehend von einem Zustand, bei welchem der Transistor 10 des Wechselstromschalters 3 leitend geschaltet ist, wird dem Transformator 7 die übliche Spannung des Wechselstromnetzes, beispielsweise von 230 V über die Leitungen 1, 2 zugeführt. Wenn von der Sekundärwicklung 8 kein Strom oder nur sehr wenig bezogen wird, entsteht im Eisenkern 9 eine relativ hohe Induktion. In Fig. 2 ist die Magnetisierung des Eisenkernes 9 in Form der an sich bekannten Hysteresekurve 12 aufgezeichnet, in der B die Magnetisierung und H die Feldstärke bedeutet. Eine hohe Sättigung der Magnetisierung B im Eisenkern 9 bewirkt einen hohen Arbeitspunkt a1 auf der Hystereseschleife 15. Als Folge davon entsteht bei keinem oder nur sehr geringem Strombezug eine erste relativ hohe Referenz-Spannung Uz an der Zusatzwicklung 6. Diese erste relativ hohe Referenz-Spannung der Zusatzwicklung 6 wird über Leitungen 24, 26 einem Ueberwachungsteil 32 zugeführt. Dieser Ueberwachungsteil 32 enthält einen ersten Differenzverstärker 16, dem einerseits die Referenzspannung Uz und andererseits die an der Leitung 18 anliegende Spannung zugeführt wird.

Die dem ersten Differenzverstärker 16 über die Leitung 18 zugeführte Spannung muss vor Inbetriebnahme der Einrichtung abgeglichen werden. Zu diesem Zweck wird von der Sekundärspule 8 Strom bezogen, indem ein Stromverbraucher 11 oder 14 eingeschaltet wird. Dabei wird die in der Zusatzwicklung 6 induzierte Spannung dem einen Eingang des ersten Differenzverstärkers 16 zugeführt. Dem andern Eingang des Differenzverstärkers 16 wird über die Leitung 18 eine gleich grosse Spannung zugeführt, die mittels eines einstellbaren Widerstand 28 abgeglichen wird, sodass hernach beide Eingänge des Differenzverstärkers 16 eine gleich grosse Spannung haben.

Eingänge des Differenzverstärkers 16 eine gleich grosse Spannung haben.

Wenn auf der Sekundärseite Strom bezogen wird, entsteht im Eisenkern 9 eine Gegeninduktion. Der magnetische Fluss im Eisenkern 9 nimmt - als Folge der Gegeninduktion - ab, wenn auf der Sekundärseite ein Strom fliesst. Dadurch fällt der Arbeitspunkt auf der Hystereseschleife 12 von a1 auf a2 (Fig. 2). Die nun von der Zusatzwicklung 6 abgenommene zweite, niedrigere Referenz-Spannung ist somit gleich gross wie die abgeglichene Eingangsspannung der Leitung 18. Dadurch wird vom Differenzverstärker 16 kein Steuersignal an die Leitung 20 abgegeben und der Transistor 10 verbleibt in seiner leitenden Schaltlage.

Wenn auf der Sekundärseite kein oder nur ein sehr geringer Strombezug erfolgt - wenn beispielsweise die Batterie 42 voll geladen ist - liegt als Folge der geringeren Gegeninduktion an der Zusatzwicklung 6 die erste, höhere Referenz-Spannung Uz vor, entsprechend dem Arbeitspunkt a1 auf der Hystereseschleife 12. Der erste Differenzverstärker 16 stellt einen Spannungsunterschied fest und generiert ein Ausgangssignal. Dieses Ausgangssignal wird von der Leitung 20 über ein Flip-Flop 22 dem Transistor 10 zugeführt, mit der Wirkung, dass der Transistor 10 in den nichtleitenden Zustand gelangt und die Primärwicklung 5 des Transformators 7 spannungslos wird.

Somit bewirkt eine Veränderung des Magnetisierungsgrades des Eisenkernes 9 eine Veränderung der Spannung an der Zusatzwicklung 6 wegen Gegeninduktion. Die mit ΔB bezeichnete Magnetisierungsänderung ist abhängig von der Last auf der Sekundärseite und wird ausgenützt zum Ein- und Ausschalten der Primärwicklung des Transformators. Es gilt die Formel

$$Uz = 4,44 \cdot B \cdot n \cdot A \cdot f$$

Es bedeuten:

Uz = Spannung in der Zusatzwicklung in Volt
4,44 = Konstante
B = Magnetisierung des Eisenkernes in Tesla
n = Windungszahl der Zusatzwicklung
A = Eisenquerschnittsfläche durch die Spule in cm2
f = Frequenz in Hertz

Wenn vom spannungslosen Zustand des Transformators 7 ausgehend von einem Verbraucher Strom benötigt wird, muss dafür gesorgt werden, dass der Transformator 7, ohne dass manuell eingegriffen werden muss, in den Betriebszustand gelangt.

Dies wird durch eine Abfrageschaltung 30 bewirkt mit der festgestellt wird, ob sekundärseitig Strom benötigt wird oder nicht. Diese Abfrageschaltung 30 enthält ein Zeitglied 34 z.B. mit einem regulierbarem Widerstand 34 und einem Kondensator 35 sowie einen weiteren Differenzverstärker, der nachfolgend als zweiter Differenzverstärker 38 bezeichnet wird. Dieses Zeitglied 34 bewirkt, dass der Transformator 7 zur Feststellung, ob sekundärseitig Strom gebraucht wird oder nicht, periodisch oder aperiodisch kurzzeitig - beispielsweise während einigen Millisekunden - eingeschaltet wird. Die Abfrageperiode kann zwischen etwa 1 Sekunde und mehreren Stunden gewählt werden, wobei diese vom Zeitglied 34 bestimmte Zeitperiode entweder fest oder einstellbar ist. Die beiden Leitungen 44, 45 sind an den Wechselstromschalter 3 vor und nach dem Transistor 10 angeschlossen. Wenn das Zeitglied 34 bei Ablauf der individuell einstellbaren Abfrage-Periode aktiv wird, gelangt das erzeugte Steuersignal über die Leitung 46 zu einem Flip-Flop 22. Dies hat zur Folge, dass über die Leitung 47 der Transistor 10 leitend wird. Hernach wiederholen sich die beschriebenen Vorgänge, d. h. die Gegeninduktion bewirkt, dass der Arbeitspunkt auf der Hystereseschleife auf a2 sinkt. Vom ersten Differenzverstärker 16 wird kein Steuersignal an die Leitung 20 abgegeben und bei sekundärseitigem Strombedarf bleibt somit der Transistor 10 leitend.

Wenn dagegen kein Strombedarf durch einen Stromverbraucher 11,42 vorliegt, liegt am ersten Differentialverstärker 16 ungleiche Spannung vor, was zur Ausgabe eines Steuersignales über die Leitung 47 führt, welches den Transistor 10 in den nichtleitenden Zustand bringt. Hernach bleibt der Transformator 7 vom Netz abgetrennt.

Die Abfrageschaltung 30 kann nur aktiv werden, wenn sich der Transistor 10 in seinem nichtleitenden Zustand befindet. Nur dann besteht zwischen den zum zweiten Differenzverstärker 38 führenden Leitungen 44, 45 eine Spannungsdifferenz und damit eine Spannung am Regler 34 und am Kondensator 35.

Der Wechselstromschalter 3, der Ueberwachungsteil 32 und die Abfrage-Schaltmittel 30 befinden sich auf der Primärseite des Transformators 7. Dadurch bleibt eine vollständige galvanische Trennung durch den Transformator erhalten ohne Zusatzaufwand. Der Transformator 7 erfüllt dabei weiterhin alle üblicherweise verlangten Sicherheitsanforderungen.

Der zusätzliche Aufwand ist gegenüber handelsüblichen Transformatoren gering und der Platzbedarf ist klein. Die gesamte Steuerung kann mit einem integrierten Schaltkreis realisiert werden.

Eine Variante besteht darin, die Zusatzwicklung 6 auf der Sekundärseite anzuordnen, was allerdings zusätzliche Sicherheitsmassnahmen erfordert.

An Stelle des Zeitgliedes 34 kann die Abfrageschaltung 30 auch durch andere Geber aktiviert werden, beispielsweise in Abhängigkeit der Temperatur, des Druckes oder anderer physikalischen Grössen.

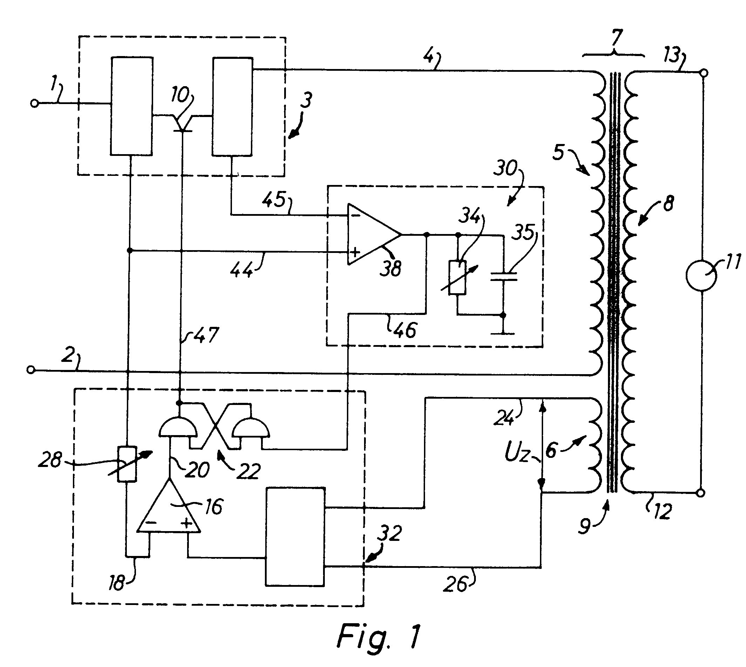

In Fig. 3 ist lediglich der rechte Teil eines Schaltplantes für ein Batterieladegerät dargestellt; der linke Teil des Schaltplanes entspricht Fig. 1.

**Patentansprüche**

1. Schalteinrichtung zum Abtrennen des Versorgungsnetzes von einem Transformator (7), wenn von einem sekundärseitigen Verbraucher (11) kein Strom benötigt wird, wobei der Transformator (7) eine Zusatzwicklung (6) aufweist und ein Ueberwachungsteil (32) vorhanden ist, **dadurch gekennzeichnet, dass** der Ueberwachungsteil (32) einen Differenzverstärker (16) aufweist zur Auswertung von Spannungsunterschieden in der Zusatzwicklung (6) herrührend von Magnetisierungsunterschieden (∆B) des Eisenkernes (9) in Abhängigkeit der sekundärseitigen Last der Zusatzwicklung (6).

2. Schalteinrichtung nach Anspruch 1, **dadurch gekennzeichnet, dass** die Zusatzwicklung (6) der Primärwicklung (5) zugeordnet ist.

3. Schalteinrichtung nach Anspruch 1 oder 2, **dadurch gekennzeichnet, dass** die Wicklungszahl der Primärwicklung (5) mindestens das 5-fach der Wicklungszahl der Zusatzwicklung (6) beträgt.

4. Schalteinrichtung nach einem der Ansprüche 1 bis 3, **dadurch gekennzeichnet, dass** der Ueberwachungsteil (32) eine Abfrageschaltung (30) mit einem einstellbaren Zeitglied (34) aufweist, das mit einem Differenzverstärker (34) und einem Flip-Flop (22) zusammenwirkt.

5. Schalteinrichtung nach Anspruch 4, **dadurch gekennzeichnet, dass** die Abfrageschaltung (30) von einem zeitunabhängigen physikalischen Wert aktiviert ist.

6. Schalteinrichtung nach einem der Ansprüche 1-4, **dadurch gekennzeichnet, dass** die sekundärseitige Last ein Gleichrichter (14) eines Batterieladegerätes ist und der Transistor (10) die Primärwicklung (5) bei geladener Batterie (42) abtrennt.

7. Verfahren zum Stromlosschalten eines Transformators der primärseitig mit einer Zusatzwicklung (6) versehen wird, **dadurch gekennzeichnet, dass** die unterschiedliche Sättigung der Magnetisierung (11) des Transformator-Eisenkernes (9) zwischen Primärwicklung (5) und Zusatzwicklung (6) in Abhängigkeit des sekundärseitigen Strombedarfes zur Ausgabe eines Steuersignales für einen der Primärwicklung (5) vorgeschalteten Transistor (10) ausgewertet wird.

### Claims

1. Circuit device for disconnecting a power supply network from a transformer (7), when a load (11) connected to the secondary does not require power, where the transformer (7) having an auxiliary winding (6), and a monitoring circuit (32) exists, **characterised in that** the monitoring circuit (32) having a differential amplifier (16) to evaluate differences in voltage of the auxiliary winding (6) due to differences in magnetisation (∆B) of the iron core (9) in dependence on the secondary load of the auxiliary winding (6).

2. Circuit device according to claim 1, **characterised in that** the auxiliary winding (6) is associated with the primary winding (5).

3. Circuit device according to claim 1 or 2, **characterised in that** the number of windings of the primary winding (5) is at least five times to the number of windings of the auxiliary winding (6).

4. Circuit device according to one of the claims 1 to 3, **characterised in that** the monitoring circuit (32) having an interrogation circuit (30) with an adjustable timing circuit (34) which acts together with a differential amplifier (34) and a flip-flop (22).

5. Circuit device according to claim 4, **characterised in that** the interrogation circuit (30) is activated by a time-independent physical parameter.

6. Circuit device according to one of the claims 1 to 4, **characterised in that** the secondary load is a rectifier of a battery charger and the transistor (10) disconnects the primary winding (5) if the battery (42) is loaded.

7. Method to switch at lack of current of a transformer which is primary provided with an auxiliary winding (6), **characterised in that** the difference in saturation of magnetisation (11) of the iron core (9) of the transformer between the primary winding (5) and the auxiliary winding (6) is evaluated in dependence on the requirement of current of the secondary for deriving a sensing signal for a transistor (10) which superposed to the primary winding (5).

### Revendications

1. Dispositif de commutation pour isoler le réseau d'alimentation d'un transformateur (7) lorsque aucun courant n'est utilisé par un récepteur (11) du côté du secondaire, dans lequel le transformateur (7) comporte un enroulement supplémentaire (6) et dans lequel il existe un élément de contrôle (32), **caractérisé en ce que** l'élément de contrôle (32) comporte un amplificateur différentiel (16) destiné à évaluer des différences de tension dans l'enroulement supplémentaire (6) causées par des différences de magnétisation (∆B) du noyau de fer (9) en fonction de la charge de l'enroulement supplémentaire (6) du côté du secondaire.

2. Dispositif de commutation selon la revendication 1, **caractérisé en ce que** l'enroulement supplémentaire (6) est associé à l'enroulement primaire (5).

3.  Dispositif de commutation selon la revendication 1 ou 2, **caractérisé en ce que** le nombre tours de l'enroulement primaire (5) est au moins égal à 5 fois le nombre de tours de l'enroulement supplémentaire (6).

4.  Dispositif de commutation selon l'une des revendications 1 à 3, **caractérisé en ce que** l'élément de contrôle (32) possède un circuit interrogateur (30) comportant un système temporisé réglable (34) qui coopère avec un amplificateur différentiel (34) et une bascule bistable (22).

5.  Dispositif de commutation selon la revendication 4, **caractérisé en ce que** le circuit interrogateur (30) est activé par une valeur physique indépendante du temps.

6.  Dispositif de commutation selon l'une des revendications 1 à 4, **caractérisé en ce que** la charge du côté du secondaire est un redresseur (14) d'un appareil de charge de batterie, et **en ce que** le transistor (10) isole l'enroulement primaire (5) lorsque la batterie est chargée.

7.  Procédé pour déconnecter l'alimentation en courant d'un transformateur qui est doté du côté du primaire d'un enroulement supplémentaire (6), **caractérisé en ce que** la différence saturation de la magnétisation (11) du noyau de fer (9) du transformateur entre l'enroulement primaire (5) et l'enroulement supplémentaire (6) est évaluée en fonction du besoin en courant du côté du secondaire en vue de délivrer un signal de commande destiné à un transistor (10) monté en amont de l'enroulement primaire (5).

Fig. 1

Fig. 2

Fig. 3

7